# EUROPEAN PATENT APPLICATION

(11) **EP 4 773 414 A1**
(43) Date of publication of application: **08.07.2026**
(21) Application number: 25822478.1
(22) Date of filing: 30.04.2025
(51) Int. Cl.: H01M 50/538, H01M 50/167, H01M 50/528, H01M 50/595, H01M 10/613, H01M 10/625

(54) **CYLINDRICAL BATTERY CELL**

(30) Priority: 13.06.2024 KR 20240076876; 24.04.2025 KR 20250053631
(71) Applicant: LG Energy Solution, Ltd., Seoul 07335 (KR)
(72) Inventor: JEONG, Seokhun, Daejeon 34122 (KR); OH, Kyungteak, Daejeon 34122 (KR)
(74) Representative: Goddar, Heinz J.
(86) International application number: PCT/KR2025/005933
(87) International publication number: WO 2025/258848

(57) **Abstract**

Provided is a cylindrical battery cell having a simple structure, a simple assembly process, and high energy density. An electrode assembly is accommodated in an accommodation space of a can of the battery cell. One electrode of the electrode assembly is bonded to an end wall provided at a lower end portion of the can, and the other electrode of the electrode assembly is bonded to a cap covering an opening provided at an upper end portion of the can. The bonding is performed by irradiating a laser to the end wall and an outer surface of the cap to penetrate and weld the end wall and the outer surface of the cap. A first current collecting plate including a radially extending portion and an axially extending portion is interposed between the cap and the electrode assembly. The radially extending portion is bonded to a first electrode of the electrode assembly, and an upper end portion of the axially extending portion is bonded to a bottom surface of the cap.

## Description

### [TECHNICAL FIELD]

<01> This application claims the benefit of priority based on Korean Patent Application No. 10-2024-0076876 filed on June 13, 2024, and Korean Patent Application No. 10-2025-0053631 filed on April 24, 2025, and entire contents disclosed in the document of the patent applications are included as a part of this specification.

<02> The present invention relates to a cylindrical battery cell, and more particularly, to a cylindrical battery cell having a simple structure, a simple assembly process, and high energy density.

### [BACKGROUND ART]

<03> As electric vehicles become more widespread, the capacity of cylindrical battery cells manufactured using cylindrical battery cans as housings is increasing. Since the energy capacity of a single battery cell is large, it is necessary to further reduce the internal resistance of these cylindrical battery cells. In addition, it is desirable to have a high energy density to increase vehicle mountability.

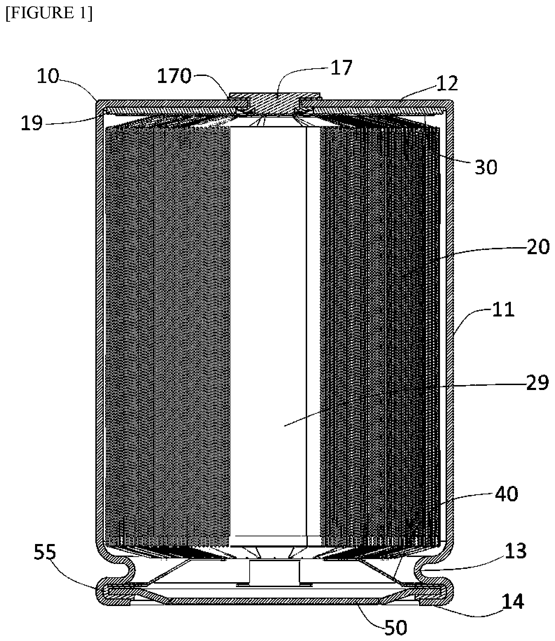

<04> Conventionally, as shown in FIG. 1, a first current collecting plate 30 is welded to a first axial end of a jelly-roll type cylindrical electrode assembly 20 to electrically connect the first current collecting plate 30 to a first electrode of the electrode assembly 20, and the first current collecting plate 30 is welded to a rivet terminal 17 fixed to an axial end wall 12 of a can 10 to electrically connect the first electrode of the electrode assembly 20 to the rivet terminal 17.

<05> In addition, when welding the first current collecting plate 30 to the rivet terminal 17, ultrasonic welding is performed by inserting a thin and long welding horn tip through a core hollow portion 29 of the electrode assembly 20.

<06> However, spatter that may occur during the ultrasonic welding process may damage the separator, which may reduce the battery capacity and lifespan. In addition, since there is a limit to making the welding horn tip thin and long, there is a limit to reducing the diameter of the core hollow portion 29 of the electrode assembly 20, which makes it difficult to increase the energy density of the battery cell.

<07> In addition, since the first current collecting plate 30 and the first end wall 12 have different polarities, an insulator 19 is interposed therebetween to provide electrical insulation. However, the insulator 19 also occupies the internal space of the can 10, making it difficult to increase the energy density.

<08> Furthermore, the shape of the second current collecting plate 40 connected to the second electrode of the electrode assembly 20 is complex, and it is difficult to reduce the cost due to the inconvenience of assembly where the second current collecting plate 40 is assembled with the cap 50.

### [DISCLOSURE]

### [TECHNICAL PROBLEM]

<09> In order to solve above-described problems, it is an object of the present invention to provide a structure of battery cell wherein the by-products of welding does not remain inside a can during the welding the first current collecting plate to the first electrode terminal.

<10> It is an object of the present invention to provide a battery cell having parts with simple shapes and a simple assembly process, thereby reducing the production cost.

<11> It is an object of the present invention to provide a battery cell having a higher energy density.

<12> The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

<13> In order to solve above-described problems, the present invention provides a battery cell manufactured by accommodating an electrode assembly in an accommodating space of a can, bonding one electrode of the electrode assembly to an end wall provided at a lower end of the can, and bonding the other electrode of the electrode assembly to a cap covering an opening provided at an upper end of the can.

<14> The bonding between the end wall and the electrode may be formed by welding through an outer surface of the end wall.

<15> The bonding between the cap and the electrode may be formed by penetrative welding from an outer surface of the cap.

<16> The penetrative welding may be formed by irradiating a laser on each of the outer surfaces.

<17> The electrode assembly may have a cylindrical jelly-roll shape in which the first electrode and the second electrode coated with an active material are wound around a core with a separator interposed therebetween.

<18> The non-coated portion of the first electrode of the electrode assembly without the active material may be bent in the radial direction at the first axial end of the electrode assembly to provide a first surface substantially intersecting the axial direction.

<19> The non-coated portion of the second electrode of the electrode assembly without the active material may be bent in the radial direction at the second axial end of the electrode assembly to provide a second surface substantially intersecting the axial direction.

<20> The can is provided with: a side wall extending in the axial direction and surrounding an internal space in a circumferential direction; an opening provided at the first axial end of the side wall; and an end wall connected to the second axial end of the side wall and extending in the radial direction to cover the internal space.

<21> The end wall may be integrally connected to the side wall.

<22> The end wall and the side wall may be integrated in a monolithic form.

<23> The first current collecting plate is bonded to the first axial end of the electrode assembly so as to be electrically connected to the first electrode.

<24> The first current collecting plate includes: an axial extension welded to the cap, the axial extension having an upper axial end in contact with a bottom surface of the cap; and a radial extension extending from the axial extension in a radial direction and bonded to the first axial end of the electrode assembly.

<25> In some embodiments, the axial extension may have a center tube shape having a center hole extending in the axial direction.

<26> In some embodiments, the axial extension may be provided with a hole perforating in the axial direction, the hole communicating with a core hollow portion of the electrode assembly.

<27> In some embodiments, the radial extension may be connected to a lower axial end of the axial extension.

<28> In some embodiments, the radial extension may extend radially outward from the axial extension.

<29> In some embodiments, the radial extension may be may be bonded to a tab of the first electrode provided at the first axial end of the electrode assembly.

<30> In some embodiments, the axial extension may be bonded to the cap at a first welded portion welded through an outer surface of the cap.

<31> The second electrode may be electrically connected to the end wall.

<32> The second electrode may be bonded to the end wall.

<33> The second electrode may be electrically connected to the end wall at a second welded portion welded through an outer surface of the end wall.

<34> The second current collecting plate may be bonded to the second axial end of the electrode assembly so as to be electrically connected to the second electrode.

<35> The second current collecting plate may have a flat disk shape.

<36> The axially inner surface of the second current collecting plate may be bonded to the second surface provided by the non-coated portion of the second electrode of the electrode assembly.

<37> The electrode assembly is accommodated in the internal space of the can.

<38> The second axial end of the electrode assembly faces the end wall.

<39> The axially outer surface of the second current collecting plate bonded to the second axial end of the electrode assembly may be in contact with the end wall.

<40> The second electrode of the electrode assembly and the end wall of the can may be bonded at a second welded portion welded through the end wall to the second axial end of the electrode assembly.

<41> The second welded portion may extend through the end wall to the axially outer surface of the second current collecting plate to bond the second current collecting plate to the end wall.

<42> An insulating tape may be attached to an edge of the radial extension and a corner portion of the edge of the upper end of the first current collecting plate.

<43> The insulating tape may be attached to an upper surface of an edge of the radial extension and an outer circumferential surface of the first axial end of the electrode assembly.

<44> An electrolyte may be injected into the accommodating space of the can accommodating the electrode assembly therein.

<45> The electrolyte may be injected through the opening, and at least a portion of the injected electrolyte may reach the bottom of the can through the hole of the axial extension of the first current collecting plate such that the electrode assembly is impregnated therewith.

<46> In some embodiments, a beading may be provided on the side wall of the can between the first axial ends of the side wall and the electrode assembly where the side wall is radially recessed inward.

<47> The beading may be in contact with or adjacent to the electrode assembly with the insulating tape interposed therebetween.

<48> A crimped portion may be provided where the first axial end of the side wall is processed to extend radially inward. The edge of the cap may be disposed between the beading and the crimped portion in the axial direction.

<49> The edge of the cap may be disposed between the beading and the crimped portion in the axial direction so as to be pressed in the axial direction.

<50> The edge of the cap may be crimped and fixed by the beading and the crimped portion with the gasket interposed therebetween.

<51> Accordingly, the cap may seal and be fixed to the first axial end of the side wall of the can.

<52> The cap is bonded to the first current collecting plate at the first welded portion.

<53> The first welded portion extends through the cap to an upper axial end of the axial extension in contact with the bottom surface of the cap to bond the first current collecting plate to the cap.

<54> The cap may constitute a first electrode terminal electrically connected to the first electrode of the electrode assembly, and the can may constitute a second electrode terminal electrically connected to the second electrode of the electrode assembly.

<55> The crimped portion may provide a flat surface facing axially outward.

<56> The center of the cap may protrude axially outer than the edge thereof and may provide a flat surface facing axially outward.

<57> The height of the surface of the center of the cap may be equal to or slightly higher than that of the surface of the crimped portion.

<58> The surface of the center of the cap may be where a bus bar of the first polarity is bonded, and the surface of the crimped portion may be where a bus bar of the second polarity is bonded.

<59> In some embodiments, the edge of the cap and the edge of the side wall may be seam welded.

<60> The cap may have a center and a perimeter that are electrically insulated from each other, and the axial extension may be welded to a bottom surface of the center.

<61> The surface of the center of the cap may be where a bus bar of the first polarity is bonded, and the surface of the perimeter may be where a bus bar of the second polarity is bonded.

<62> The present invention provides a battery pack having a pack case including the battery cell.

<63> The battery cell may be accommodated in the pack case in a manner that the end wall is in contact with a bottom of the pack case and a cap faces upward.

<64> A cooling structure for cooling the battery cell through the end wall of the battery cell may be provided at the bottom of the pack case.

<65> The present invention provides a vehicle equipped with a battery pack and driven by power from the battery pack.

### [ADVANTAGEOUS EFFECTS]

<66> According to the battery cell of the present invention, the welding of the collecting plate and the electrode terminal are performed outside the can through laser penetration welding, and the welding is not performed in the internal space of the battery can such that the by-products of the welding does not affect the performance of the battery cell.

<67> In addition, since it is not necessary to insert the horn tip for ultrasonic welding into the hollow portion of the electrode assembly, the inner diameter of the hollow portion of the electrode assembly may be minimized. Accordingly, the energy density of the battery cell may be increased.

<68> The battery cell of the present invention allows reducing the assembly work by omitting the rivet terminal and insulator parts such that the production cost may be reduced.

<69> In addition, since the electrode assembly may be made larger by the amount of the space where the rivet terminal and insulator are omitted, the energy density of the battery cell may be increased.

<70> The battery cell of the present invention is provided with the first electrode terminal having a larger area constituted by the cap compared to the rivet terminal such that it is advantageous for welding the bus bar.

<71> The battery cell of the present invention has both the first electrode terminal and the second electrode terminal exposed at the upper portion such that cooling of the battery cell through the bottom is possible, and the electrode assembly is in contact with the bottom of the can such that the bottom cooling efficiency is high.

<72> In addition to the advantageous effects described above, specific effects of the present invention will be described further while describing specific details of the present invention.

### [BRIEF DESCRIPTION OF DRAWINGS]

FIG. 1 is a cross-sectional view illustrating a comparative form of a cylindrical battery cell.
FIG. 2 is an exploded perspective view of an electrode assembly accommodated inside the can of FIG. 1 before winding.
FIG. 3 is a perspective view of a laminated electrode assembly of FIG. 2 before winding.
FIG. 4 is a perspective view of the assembled cylindrical jelly-roll type electrode assembly by winding the laminate of FIG. 3.
FIG. 5 is a perspective view illustrating the electrode assembly with a first current collecting plate bonded to an electrode tab provided at a first axial end of the electrode assembly facing an opening of the can.
FIG. 6 is a perspective view illustrating the electrode assembly with a second current collecting plate bonded to an electrode tab provided at a second axial end of the electrode assembly facing the end wall of the can.
FIG. 7 is a perspective view illustrating the electrode assembly of FIG. 5 with an insulator in insulating tape form attached to the first current collecting plate and a corner thereof.
FIG. 8 is a perspective view illustrating the electrode assembly of FIG. 7 being inserted into the can.
FIG. 9 is a cross-sectional view illustrating the electrode assembly inserted in the can of FIG. 8 with the second current collecting plate in contact with the end wall and the first current collecting plate disposed at the opening of the can.
FIG. 10 is a cross-sectional view illustrating the second current collecting plate welded to the end wall of the can of FIG. 9 with a laser through the end wall.
FIG. 11 is a bottom view of the can of FIG. 10.
FIG. 12 is a cross-sectional view illustrating the process of beading the upper portion of the can of FIG. 10 and injecting the electrolyte through the first current collecting plate.
FIG. 13 is a cross-sectional view illustrating the can sealed by covering the opening of the can with a cap and forming a crimped portion after injecting the electrolyte as shown in FIG. 12.
FIG. 14 is a cross-sectional view illustrating the cap of FIG. 13 welded to the first current collecting plate with a laser through the cap.
FIG. 15 is a plan view of the can of FIG. 14.
FIG. 16 is a perspective view of the can of FIG. 14.
FIG. 17 is a cross-sectional view illustrating another embodiment wherein an electrolyte is injecting with the second current collecting plate of the electrode assembly welded to the end wall of the can.
FIG. 18 is a cross-sectional view illustrating the process of covering the opening of the can with the cap after injecting the electrolyte as shown in FIG. 17, seam welding the cap and the can with a laser, and welding the first current collecting plate through the cap.
FIG. 19 is a diagram schematically illustrating a battery pack having a battery cell according to an embodiment.
FIG. 20 is a diagram schematically illustrating a vehicle having the battery pack of FIG. 19 mounted thereon.

### [DESCRIPTION OF REFERENCE NUMERALS]

10: can (housing)
11: side wall
12: end wall
13: beading
14: crimped portion
17: rivet terminal
170: terminal gasket
19: insulating tape (insulator)
191: surface
192: side surface
20: electrode assembly
21: first electrode (anode)
22: second electrode (cathode)
23: metal foil
24: active material layer
25: coated portion
26: non-coated portion
27: electrode tab (notched tab)
28: separator
29: core hollow portion
30: anode collecting plate (first current collecting plate)
31: radial extension
32: electrode connector
33: axial extension
34: terminal connector
40: cathode collecting plate (second current collecting plate)
50: cap
51: center
52: perimeter
53: insulated sealing portion
55: gasket
W1, W2, W3: welded portion
70: battery pack
71: pack case
72: battery cell
80: vehicle

### [DETAILED DESCRIPTION OF THE PREFERRED EMBODIMENTS]

<95> The above-described objects, features and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. In the drawings, identical reference numerals are used for indicating identical or similar components.

<96> While "first", "second", etc. are used to describe various elements, these elements are of course not limited by these terms. These terms are only used to distinguish one element from another, and unless specifically stated otherwise, a first element may also be a second element.

<97> Throughout the specification, unless stated otherwise, each element may be singular or plural.

<98> Hereinafter, "arranging an element at upper portion (or lower portion) of an element" or "arranging an element at top (or bottom) of an element" refers to not only "arranging an element to be in contact with upper surface (or lower surface)" but also to "arranging an element above upper surface (or lower surface) with another element interposed therebetween."

<99> Additionally, when an element is described as being "connected to," "coupled with," or "in contact with" another element, it should be understood that the element may be "directly connected to," "directly coupled with," or "directly in contact with" another element, or the element may be "connected to," "coupled with," or "in contact with" another element with yet another element interposed therebetween or via yet another element.

<100> The expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

<101> Throughout the specification, "A and/or B" refers to A, B or A and B unless specifically stated otherwise, and "C to D" refers to from equal to or higher than C to equal to or lower D unless specifically stated otherwise.

<102> In the description of the embodiments, "axial direction" refers to "a direction in which the axis constituting the winding center of the jelly-roll type electrode assembly extends", and "radial direction" refers to "a direction toward or away from the axis," and "circumferential direction" refers to "a direction surrounding the axis."

### [CYLINDRICAL BATTERY CELL]

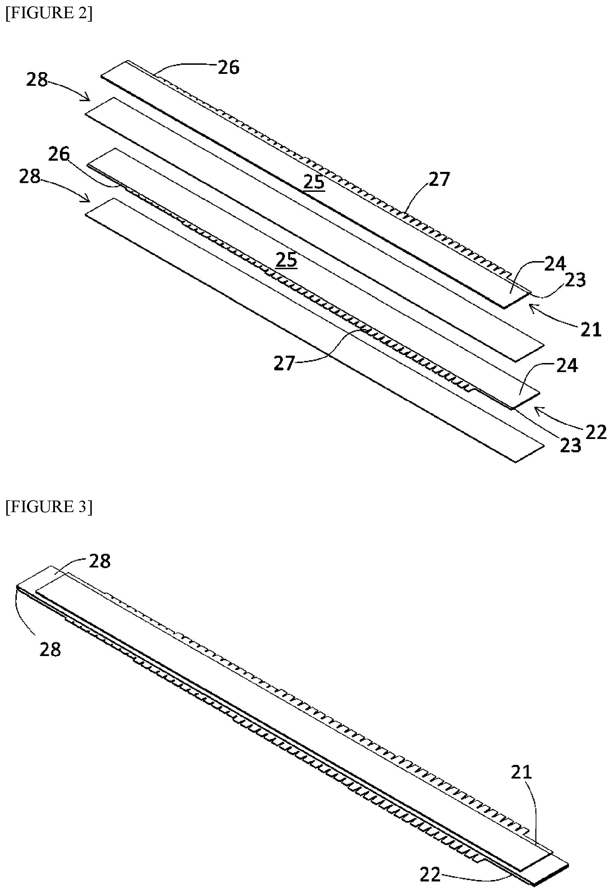

<104> Referring to FIGS. 2 to 8, a cylindrical battery cell according to an embodiment of the present invention includes: an electrode assembly 20; a collecting plates 30 and 40 electrically connected to the electrode assembly 20; and a can 10 accommodating the electrode assembly 20 and the collecting plates 30 and 40.

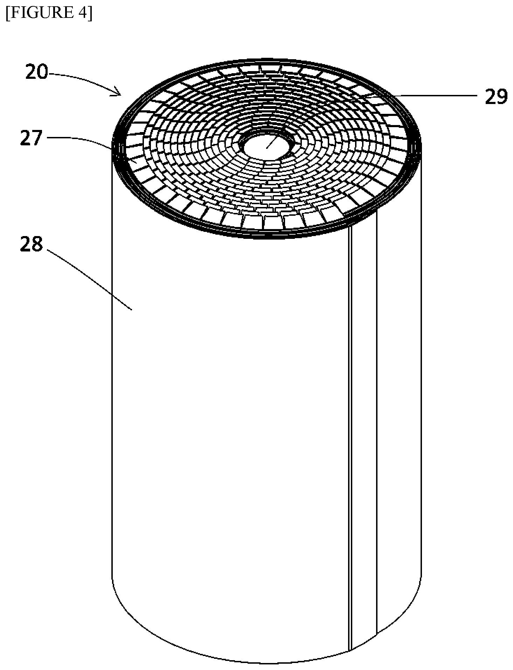

<105> The electrode assembly 20 is manufactured by preparing a first electrode 21, a second electrode 22, and a separator 28 that have a predetermined width and extend in a lengthwise direction as shown in FIG. 2, and forming a laminate by sequentially stacking the first electrode 21, the separator 28, the second electrode 22, and the separator 28 as shown in FIG. 3, and winding the laminate into a jelly-roll form around a core shaft as shown in FIG. 4.

<106> The first electrode 21 may be an anode, and the second electrode 22 may be a cathode, or vice versa.

<107> The first electrode 21 and the second electrode 22 are manufactured in the form of sheets. The electrode sheet is manufactured by applying an active material layer 24 to the surface of a metal foil 23. The electrode sheet has a coated portion 25 where the active material layer 24 is applied, and a non-coated portion 26 without the active material layer 24. The anode sheet has a non-coated portion 26 at one widthwise end thereof, and the cathode sheet has a non-coated portion 26 at the other widthwise end thereof.

<108> The non-coated portion 26 is exposed or protrude in the widthwise direction from the laminate. The non-coated portion 26 itself functions as an electrode tab 27.

<109> The non-coated portion 26 may be provided with notches at a predetermined interval to form notched tabs 27 in the shape of a flag.

<110> In the embodiment, the notched tabs 27 having a shape of an isosceles trapezoid are exemplified. However, the notched tabs 27 may have various shapes such as a semicircle, a semi-ellipse, a triangle, a rectangle, a parallelogram, etc.

<111> In addition, in the embodiment, the notched tabs 27 having the same width and arranged along the lengthwise direction are exemplified. However, the width of the notched tabs may be gradually or stepwisely increased from the core toward the outer circumference.

<112> In addition, in the embodiment, the notched tabs 27 with gradually increasing height from the core toward the outer circumference are exemplified. However, the height of the notched tabs may be a constant or may gradually decrease.

<113> In addition, in the embodiment, exemplified is a structure with notched tabs 27 removed from predetermined sections of the centripetal end and the centrifugal end of the non-coated portion 26. However, it is also apparent that the notched tabs may not be removed from the centripetal end of the non-coated portion, and the notched tabs may not be removed from the centrifugal end of the non-coated portion.

<114> In the jelly-roll type electrode assembly 20, the notched tab 27 may be bent in the radial direction and flattened as shown in FIG. 4. The notched tab 27 may be bent radially inward or radially outward. In the embodiment, exemplified is a structure with the notched tabs 27 bent radially inward.

<115> The notched tabs 27 may be bent one by one during the process of forming the jelly-roll type electrode assembly 20 by winding the laminate. Alternatively, the notched tabs 27 may be bent all at once after the jelly-roll type electrode assembly is formed by winding the laminate.

<116> The notched tabs 27 of the first electrode 21 and the notched tabs 27 of the second electrode 22 that are folded and overlapped in the radial direction may provide a first plane and a second plane substantially perpendicular to the axial direction at two axial ends of the electrode assembly 20, respectively.

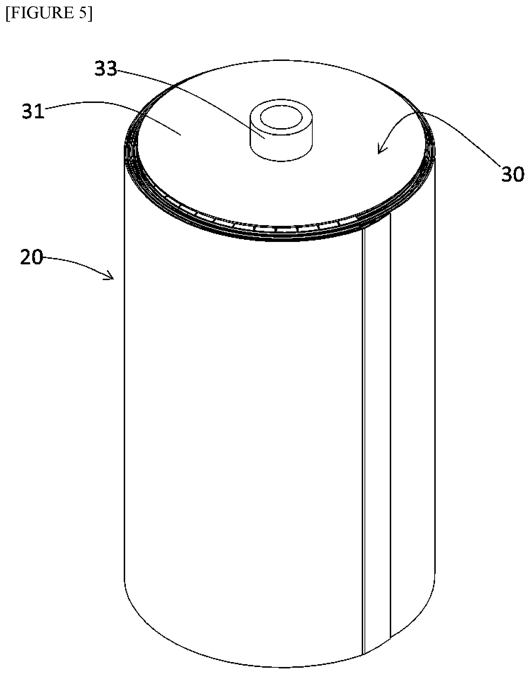

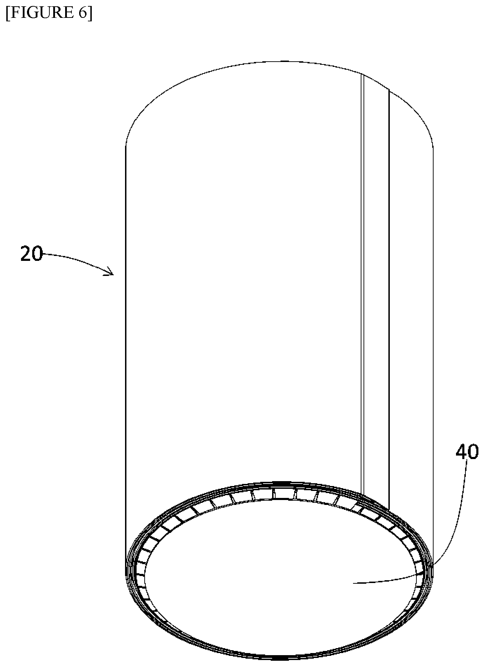

<117> As shown in FIG. 5 and FIG. 6, the first current collecting plate 30 and the second current collecting plate 40 may be bonded to the substantially flat first surface and second surface provided by the notched tabs 27 exposed at the two axial ends of the electrode assembly 20, respectively.

<118> In the embodiment, the first current collecting plate 30 is an anode collecting plate, and the second current collecting plate 40 is a cathode collecting plate. However, the first current collecting plate 30 may be a cathode collecting plate, and the second current collecting plate 40 may be an anode collecting plate.

<119> The second current collecting plate 40 may include copper material, and the first current collecting plate 30 may include aluminum material. However, the material is not limited thereto.

<120> Referring to FIG. 5, the first current collecting plate 30 includes: a terminal connector 34 provided in a portion corresponding to the hollow portion 29 of the core of the electrode assembly 20; and an electrode connector 32 surrounding the terminal connector 34.

<121> According to the embodiment, the first current collecting plate 30 may include: an axial extension 33 having a center aligned with the hollow portion 29 of the electrode assembly 20 and extending in the axial direction; and a radial extension 31 extending radially outward from the lower axial end of the axial extension 33. The axial extension 33 may have a tube shape, and the radial extension may have an annular plate shape.

<122> The electrode connector 32 is provided in the radial extension 31. By irradiating a laser to the surface of the radial extension 31, the radial extension 31 is welded to the notched tab 27 of the first electrode 21 of the electrode assembly 20 such that the first current collecting plate 30 and the first electrode 21 of the electrode assembly 20 are electrically connected. The welding line of the laser may extend radially.

<123> A hole perforating in the axial direction may be provided at the center of the axial extension 33. The inner diameter of the axial extension 33 may substantially equal to or slightly smaller than the inner diameter of the hollow portion 29 of the electrode assembly 20. Accordingly, the injection of the electrolyte may be performed smoothly, and the phenomenon of the injected electrolyte striking the separator arranged around the hollow portion 29 of the electrode assembly 20 and causing the separator to loosen may be suppressed.

<124> The terminal connector 34 is provided at the axial extension 33. The axial extension 33 may have a predetermined thickness to have sufficient rigidity in the axial direction. Since the axial extension 33 extends upward in the axial direction, the welding of the first current collecting plate 30 and the cap 50 described later may be performed more smoothly.

<125> The first current collecting plate 30 may be manufactured by manufacturing the axial extension 33 and the radial extension 31 as separate parts and then bonding the same together.

<126> Referring to FIG. 6, the second current collecting plate 40 may have a disk shape. Accordingly, by irradiating a laser onto the surface of the second current collecting plate 40 to weld the second current collecting plate 40 to the notched tab 27 of the second electrode 22 of the electrode assembly 20, the second current collecting plate 40 and the second electrode 22 of the electrode assembly 20 are electrically connected. The welding line of the laser may extend radially.

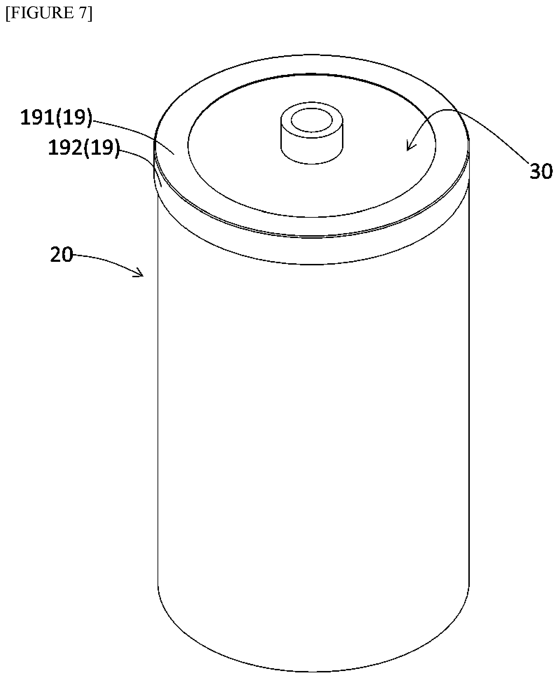

<127> Referring to FIG. 7, an insulating tape 19 having an electrically insulating property is attached to the upper portion of the electrode assembly 20, and the insulating tape 19 includes a surface 191 covering an edge of an upper surface of the electrode assembly 20 and a side surface 192 covering an upper edge of a circumferential surface of the electrode assembly 20. Accordingly, the insulating tape 19 may electrically insulate the notched tab 27 and the first current collecting plate 30 of the first electrode 21 of the electrode assembly 20 from the can 10.

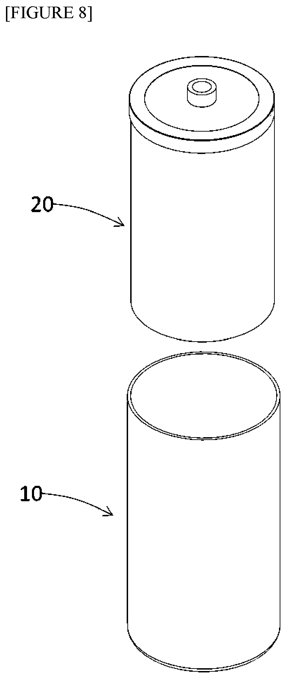

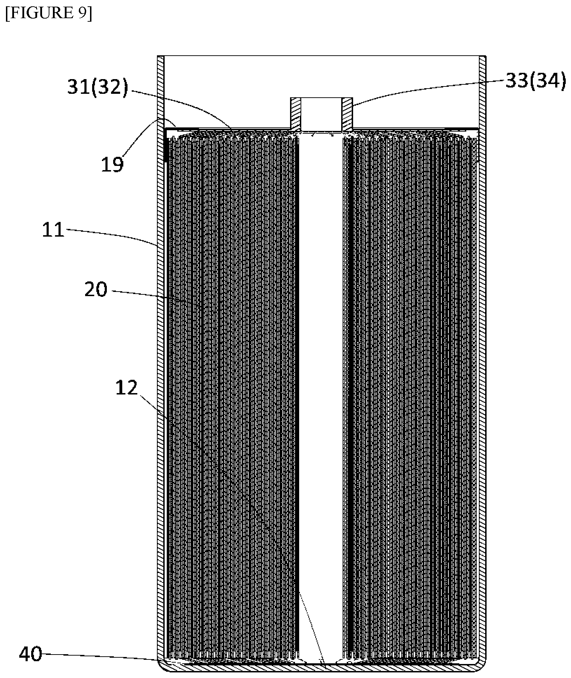

<128> Referring to FIG. 8 and FIG. 9, the can 10 includes: a side wall 11 extending in the axial direction between first and second ends thereof; and an end wall 12 connected to the second end of the side wall 11 and extending in the radial direction. The first end of the side wall 11 defines the opening of the can 10.

<129> The end wall 12 may have a disk shape, and the side wall 11 may have a circular tube shape.

<130> The end wall 12 and the side wall 11 may be manufactured by subjecting a metal sheet with nickel plated on the surface of steel to deep drawing, and trimming the front end of the side wall 11 with a punch while holding the same with a blank holder. Apparently, the material of the can 10 is not limited thereto.

<131> The electrode assembly 20 is accommodated in the can 10 through the opening with the second current collecting plate 40 aligned to face the end wall 12 of the can 10. Accordingly, two sides of the flat second current collecting plate 40 are interposed between the end wall 12 and the surfaces of the notched tabs 27 of the second electrode 22. The second current collecting plate 40 is substantially in surface-contact with the surfaces of the notched tabs 27 of the second electrode 22 and also in surface-contact with the end wall 12.

<132> In addition, with the electrode assembly 20 accommodated in the can 10, the electrode tabs 27 of the first electrode 21 and the first current collecting plate 30 are arranged to face the opening of the side wall 11, and the side surface 192 of the insulating tape 19 electrically insulates the electrode tab 27 of the first electrode 21 and the first current collecting plate 30 from the side wall 11 of the can 10.

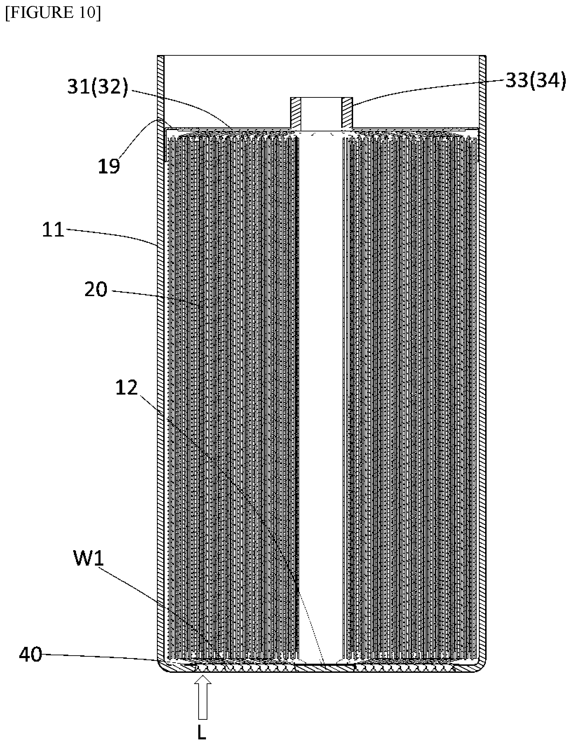

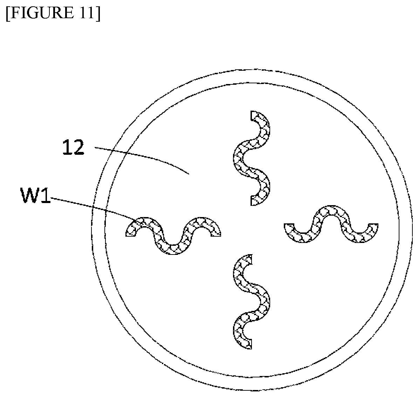

<133> Referring to FIGS. 10 and 11, the second current collecting plate 40 is bonded to the end wall 12 of the can 10. The bonding may be a thermal bonding. The thermal bonding may be, for example, welding. The welding may be performed by irradiating a laser L onto the end wall 12 of the can 10 from the outside of the can 10. That is, the welding may be performed by welding the end wall 12 to the second current collecting plate 40 through the end wall 12.

<134> In order to increase the reliability and the area of the welding of the welded portion W1, the laser L may be irradiated in the radial direction in scanning fashion, and preferably, in a zigzag shape. In addition, the welded portion W1 may be provided at a plurality of locations spaced apart from one another at a predetermined angle in the circumferential direction.

<135> In the embodiment, exemplified is a structure wherein the second electrode 22 and the end wall 12 are electrically connected through the second current collecting plate 40. However, the second current collecting plate 40 may be omitted. That is, the laser penetration welding may be performed as described above with the notched tab 27 of the second electrode 22 bent radially inward in direct contact with the inner surface of the end wall 12.

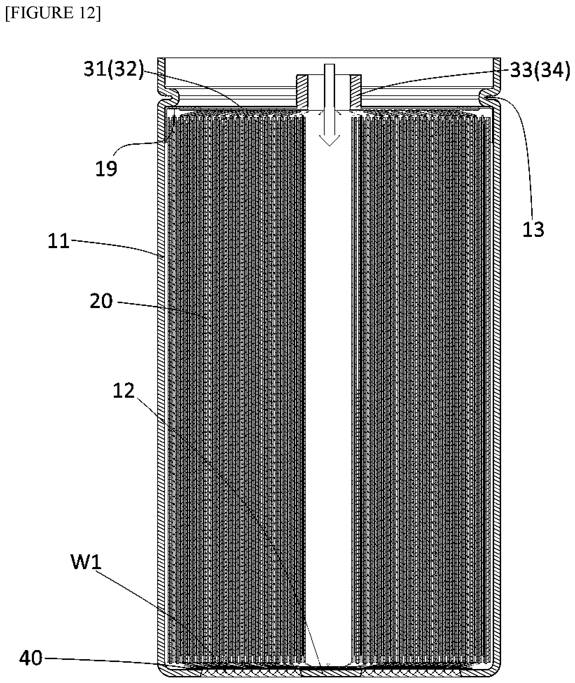

<136> Referring to FIG. 12, according to a first embodiment, after welding the second current collecting plate 40 to the end wall 12, a beading 13 may be formed at the end portion near the opening of the side wall 11 of the can 10. The axial lower portion of the beading 13 interferes with the surface 191 of the insulating tape 19 at the edge of the axially upper surface of the electrode assembly 20, and may regulate the axial position of the electrode assembly 20. The surface 191 of the insulating tape 19 electrically insulates the electrode tab 27 of the first electrode 21 and the first current collecting plate 30 from the beading 13 of the side wall 11 of the can 10.

<137> Apparently, unlike the embodiment, the beading 13 may be processed first as shown in FIG. 12, and the welded portion W1 may be then formed as shown in FIG. 10.

<138> After the welded portion W1 is formed and the beading 13 is processed, the electrolyte may be injected into the can 10 as shown in FIG. 12. The injection nozzle for injecting the electrolyte may be placed on the axially upper surface of the beading 13. Apparently, the injection nozzle may be seated on the axially upper surface of the axial extension 33.

<139> The interior of the electrode assembly 20 may be impregnated with at least a portion of the electrolyte injected through the hole provided in the axial extension 33 of the first current collecting plate 30.

<140> Before covering the opening with the cap 50, the electrolyte may be injected into the can 10.

<141> After injecting the electrolyte, the upper surface of the axial extension 33 of the first current collecting plate 30 may be cleaned when necessary.

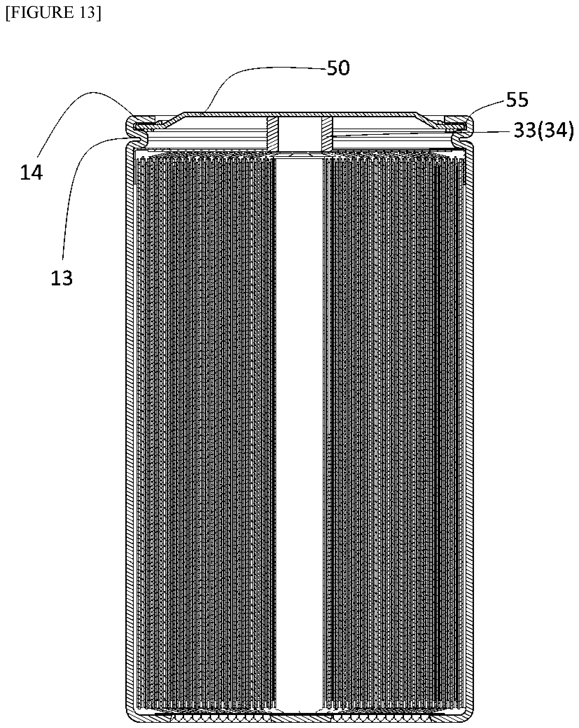

<142> When the electrolyte injection is completed, the opening of the can 10 is covered and sealed with the cap 50 as shown in FIG. 13. The cap 50 may be manufactured from a metal plate. The cap 50 may be press-processed such that the center protrudes upward in the axial direction with respect to the edge.

<143> The edge of the cap 50 is placed on the beading 13 of the side wall 11 with the gasket 55 interposed therebetween, and the first end of the side wall 11 may be crimped radially inward to form the crimped portion 14. Accordingly, the lower surface, the outer circumferential surface, and the upper surface of the edge of the cap 50 are pressed in the axial direction by the beading 13 of the side wall 11 and the crimped portion 14 with the gasket 55 interposed therebetween.

<144> Accordingly, the can 10 is sealed by and electrically insulated from the cap 50.

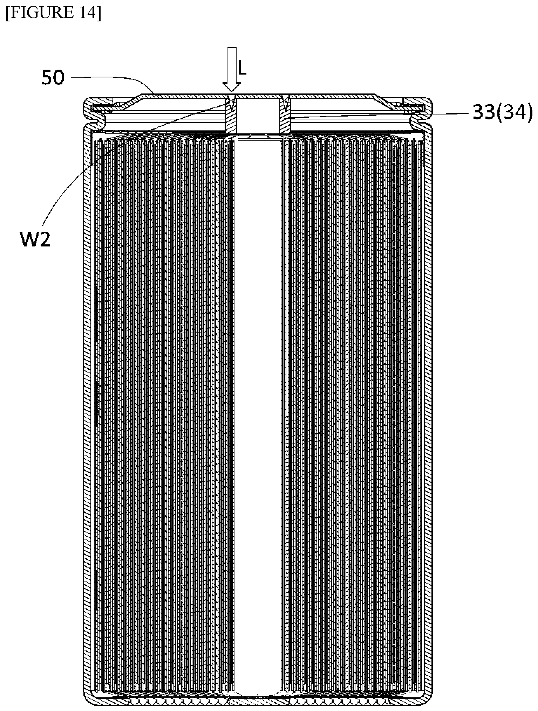

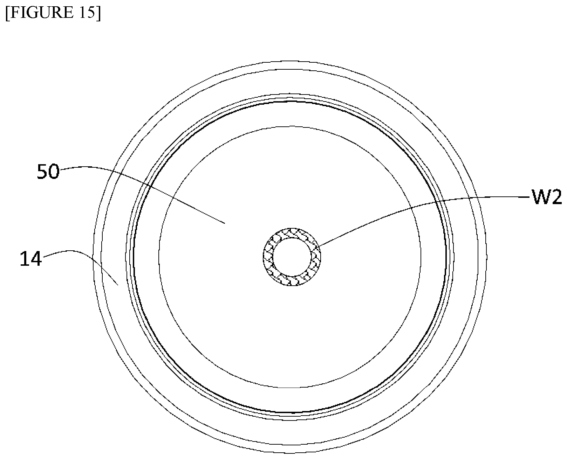

<145> Referring to FIG. 14 and FIG. 15, the first current collecting plate 30 is bonded to the cap 50. The bonding may be a thermal bonding. The thermal bonding may be, for example, welding. The welding may be performed by irradiating the laser L onto the cap 50 from the outside of the can 10. That is, the welding may be performed by welding the cap 50 to the upper surface of the axial extension 33 of the first current collecting plate 30 through the cap 50.

<146> In order to increase the reliability of the welding of the welded portion W2, the upper surface of the axial extension 33 and the bottom surface of the center of the cap 50 may be in contact in the axial direction. And the laser L may be irradiated in scanning fashion in the circumferential direction of the trajectory corresponding to the upper surface of the axial extension 33.

<147> The cap 50 may have the first polarity, and the can 10 may have the second polarity. The gasket 55 is pressed between the edge of the cap 50 and the can 10, electrically insulating the cap 50 from the can 10 and sealing the gap between the cap 50 and the can 10. In one example, the first polarity may be the anode and the second polarity may be the cathode, or vice versa.

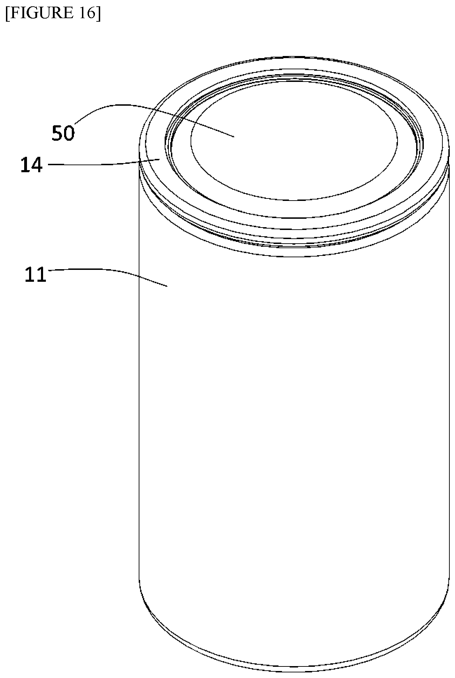

<148> Accordingly, as shown in FIG. 16, both the cap 50 and the crimped portion 14 may be disposed on the first axial end of the battery cell. Thus, both bus bars connected to the first electrode terminal 50 and the second electrode terminal 14 of the battery cell may be located on the upper portion of the battery cell. Apparently, the cap 50 provided at the first axial end of the battery cell may be used as the first electrode terminal, and the end wall 12 of the can 10 provided at the second axial end of the battery cell may be used as the second electrode terminal. However, when both electrode terminals are located at the upper portion, it is advantageous for cooling the battery cell from the bottom of the battery cell 72.

<149> In the first embodiment, exemplified is the use of beading and the crimped portion in sealing the can 10 by fixing the cap 50 to the can 10. However, the method of sealing the can 10 by fixing the cap 50 to the can 10 is not necessarily be limited thereto. For example, as in the second embodiment described below, there may be various methods for sealing the can 10 by fixing the cap 50 to the can 10.

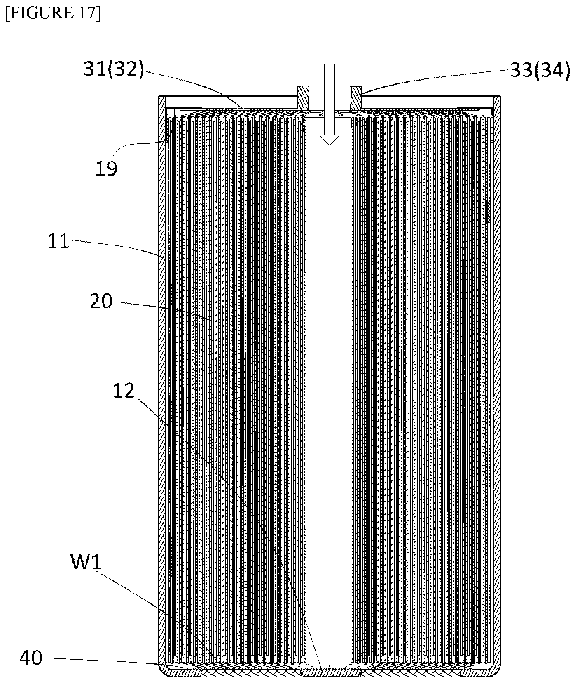

<150> Referring to FIG. 17, as the second embodiment, the electrode assembly 20 is inserted into the can 10, the second current collecting plate 40 and the end wall 12 are welded to form a welded portion W1, and the electrolyte may be then injected into the can 10. Here, the injection nozzle for injecting the electrolyte may be installed at the first axial end of the side wall 11. Apparently, alternatively, the injection nozzle may be installed on the axially upper surface of the axial extension 33.

<151> The interior of the electrode assembly 20 may be impregnated with at least a portion of the electrolyte injected through the hole provided in the axial extension 33 of the first current collecting plate 30.

<152> Before covering the opening with the cap 50, the electrolyte may be injected into the can 10.

<153> After injecting the electrolyte, the upper surface of the axial extension 33 of the first current collecting plate 30 may be cleaned when necessary.

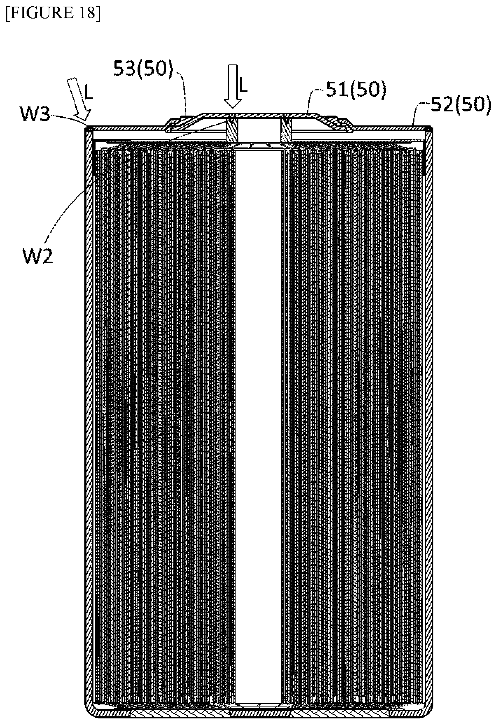

<154> When the electrolyte injection is completed, the opening of the can 10 is covered and sealed with the cap 50 as shown in FIG. 18.

<155> The cap 50 may have a center 51 and a perimeter 52 that are electrically insulated from each other. The perimeter 52 may surround the center 51 from the radially outer side of the center 51.

<156> The center 51 and the perimeter 52 may be made from a metal plate. The center 51 and the perimeter 52 may be of the same metal or different metals.

<157> The boundary of the center 51 and the perimeter 52 extending in the circumferential direction may be sealed and connected by an insulated sealing portion 53. Accordingly, the connecting portion of the center 51 and the perimeter 52 may be sealed, and the center 51 and the perimeter 52 may be electrically insulated from each other. In some embodiments, the insulated sealing portion 53 may be a glass seal. As described above, the insulated sealing portion 53 may be implemented by applying various known technologies.

<158> The surface of the center 51 may protrude further upward in the axial direction than the perimeter 52.

<159> The edge of the perimeter 52 of the cap may be bonded to the upper end portion of the side wall 11. The side wall 11 and the perimeter 52 of the cap may be bonded to each other to establish an electrical connection between the side wall 11 and the perimeter 52.

<160> As shown in FIG. 18, by irradiating the laser L along the bonding portion of the side wall 11 and the cap 50 extending along the circumferential direction, the side wall 11 and the cap 50 may be deep welded. By the welded portion W3, the can 10 is sealed by the cap 50, and the can 10 and the perimeter 52 are electrically connected.

<161> In addition, the first current collecting plate 30 is bonded to the center 51 of the cap 50. The bonding may be a thermal bonding. The thermal bonding may be, for example, welding. The welding may be performed by irradiating the laser L onto the center 51 of the cap 50 from the outside of the can 10. That is, the welding may be performed by welding the cap 50 to the upper surface of the axial extension 33 of the first current collecting plate 30 through the cap 50.

<162> In order to increase the reliability of the welding of the welded portion W2, the upper surface of the axial extension 33 and the bottom surface of the center 51 of the cap 50 may be in contact in the axial direction. And the laser L may be irradiated in scanning fashion in the circumferential direction of the trajectory corresponding to the upper surface of the axial extension 33.

<163> The center 51 of the cap 50 may have the first polarity, and the perimeter 52 and the can 10 may have the second polarity. In one example, the first polarity may be the anode and the second polarity may be the cathode, or vice versa.

<164> Accordingly, both the center 51 of the first polarity and the perimeter 52 of the second polarity may be disposed at the first axial end of the battery cell, and the center 51 may be used as the first electrode terminal of the battery cell, and the perimeter 52 may be used as the second electrode terminal. Thus, both bus bars connected to the first electrode terminal and the second electrode terminal of the battery cell may be located on the upper portion of the battery cell. Apparently, the cap 50 provided at the first axial end of the battery cell may be used as the first electrode terminal, and the end wall 12 of the can 10 provided at the second axial end of the battery cell may be used as the second electrode terminal. However, when both electrode terminals are located at the upper portion, it is advantageous for cooling the battery cell from the bottom of the battery cell 72.

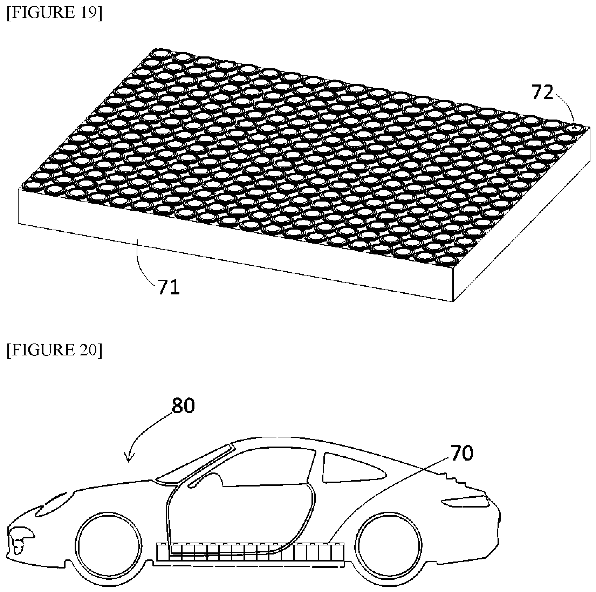

<165> The battery cell 72 may be accommodated in a pack housing 71 of a battery pack 70 as shown in FIG. 19. The battery pack 70 may be constituted using a battery module, which is an intermediate form of assembly, or may be constituted directly without the battery module as shown.

<166> Since the battery cell 72 described above has a large volume by itself, there is no particular difficulty in implementing the battery pack 70 even without using an intermediate structure called battery module. In addition, the battery cell 72 has a low internal resistance and a higher energy density. Accordingly, the energy density of the battery pack 70 equipped with the battery cell 72 may be implemented higher.

<167> The battery pack 70 with the increased energy density may store the same energy while reducing the volume and load thereof. Therefore, when the battery pack 70 to which the battery cell 72 is applied is mounted on a vehicle such as a vehicle 80 that uses electricity as an energy source as shown in FIG. 20, the driving range of the vehicle may be further increased in proportion to the energy.

<168> Even when the battery cell 72 generates heat in the electrode assembly 20, the heat is quickly dissipated to the lower portion through the second electrode 22, the second current collecting plate 40, and the end wall 12 of the can. Accordingly, when a cooling structure is implemented at the bottom of the battery pack 70, the cooling of the battery cell 72 may be performed very smoothly.

<169> Unlike the battery cell shown in FIG. 1, the battery cell of the embodiment described above may reduce the number of parts and assembly man-hours by omitting the rivet terminal 17, terminal gasket 170, and insulator 19, thereby reducing the production cost. In addition, since the volume of the electrode assembly may be secured by the amount of volume of the parts omitted, the energy density of the battery cell may be increased.

<170> It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

<171> Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. A battery cell comprising:
a can provided with: a side wall extending in an axial direction and surrounding an internal space in a circumferential direction; an opening provided at a first axial end of the side wall; and an end wall connected to a second axial end of the side wall and extending in a radial direction to cover the internal space;
an electrode assembly provided with first and second electrodes and accommodated in the internal space;
a first current collecting plate bonded to a first axial end of the electrode assembly so as to be electrically connected to the first electrode; and
a cap having an edge which is sealed and fixed to the first axial end of the side wall of the can,
wherein the first current collecting plate comprises:
an axial extension having an upper axial end in contact with a bottom surface of the cap and welded to the cap; and
a radial extension extending from the axial extension in a radial direction and bonded to the first axial end of the electrode assembly.

2. The battery cell of claim 1, wherein the axial extension has a center tube shape having a center hole extending in the axial direction.

3. The battery cell of claim 1, wherein the axial extension is provided with a hole perforating in the axial direction, the hole communicating with a core hollow portion of the electrode assembly.

4. The battery cell of claim 1, wherein the radial extension is connected to a lower axial end of the axial extension.

5. The battery cell of claim 1, wherein the radial extension is bonded to a tab of the first electrode provided at the first axial end of the electrode assembly.

6. The battery cell of claim 1, wherein the axial extension is bonded to the cap through a first welded portion formed by penetrative welding from an outer surface of the cap.

7. The battery cell of claim 1, wherein the side wall comprises:
a beading formed by the side wall being radially recessed inward between the first axial end of the side wall and the first axial end of the electrode assembly is; and
a crimped portion formed by the first axial end of the side wall being processed to extend radially inward, and
the edge of the cap is disposed between the beading and the crimped portion in the axial direction so as to be pressed by the beading and the crimped portion in the axial direction with a gasket interposed between the edge of the cap and both the beading and the crimped portion.

8. The battery cell of claim 1, wherein the edge of the cap is seam-welded to the side wall.

9. The battery cell of claim 8, wherein the cap has a center and a perimeter electrically insulated from each other, and
the axial extension is welded to a bottom surface of the center.

10. The battery cell of claim 1, further comprising an insulating tape attached to an upper surface of an edge of the radial extension and an outer circumferential surface of the first axial end of the electrode assembly.

11. The battery cell of claim 1, wherein the second electrode is electrically connected to the end wall.

12. The battery cell of claim 11, wherein the second electrode is electrically connected to the end wall through a second welded portion formed by penetrative welding from an outer surface of the end wall.

13. The battery cell of claim 11, further comprising: a second current collecting plate bonded to a second axial end of the electrode assembly so as to be electrically connected to the second electrode,
wherein an axially inner surface of the second current collecting plate is bonded to a tab of the second electrode provided at the second axial end of the electrode assembly, and
an axially outer surface of the second current collecting plate is in contact with the end wall and welded to the end wall through the second welded portion.

14. A battery pack comprising a battery cell according to any one of claims 1 to 13 and a pack case accommodating the battery cell.

15. The battery pack of claim 14, wherein the battery cell is accommodated in the pack case in a manner that the end wall is in contact with a bottom of the pack case and a cap faces upward.

16. The battery pack of claim 14, further comprising: a cooling structure provided at a bottom of the pack case, the cooling structure used for cooling the battery cell through the end wall of the battery cell.

17. A vehicle equipped with a battery pack of claim 14 and driven by power from the battery pack.
